# EUROPÄISCHE PATENTSCHRIFT

(11) **EP 1 000 073 B1**
(45) Veröffentlichungstag und Bekanntmachung des Hinweises auf die Patenterteilung: **05.02.2003**
(21) Anmeldenummer: 98943773.6
(22) Anmeldetag: 23.07.1998
(51) Int. Cl.: C07F 17/00

(54) **VERFAHREN ZUR HERSTELLUNG VON METALLOCENEN**
METHOD FOR PRODUCING METALLOCENES
PROCEDE DE FABRICATION DE METALLOCENES

(30) Priorität: 28.07.1997 DE 19732362
(43) Veröffentlichungstag der Anmeldung: 17.05.2000
(73) Patentinhaber: Basell Polyolefine GmbH, 67056 Ludwigshafen (DE)
(72) Erfinder: WINTER, Andreas, D-61479 Glashütten (DE); BINGEL, Carsten, D-65830 Kriftel (DE); FRAAIJE, Volker, D-60325 Frankfurt (DE); KUEBER, Frank, D-61440 Oberursel (DE)
(86) Internationale Anmeldenummer: EP9804629
(87) Internationale Veröffentlichungsnummer: WO99005152

(56) Entgegenhaltungen:
- EP-A- 0 344 887
- EP-A- 0 530 908
- WO-A-97/03080
- DE-C- 4 434 640

## Beschreibung

Die vorliegende Erfindung betrifft ein Verfahren zur Herstellung von rac/meso-Metallocenen, die rac/meso-Metallocene selbst sowie die Verwendung von rac/meso-Metallocenen zur Herstellung von Polyolefinen.

Racemische Metallocene mit aromatischen, teilhydrierten oder hydrierten π-Liganden sind als Katalysatorvorstufen für die Polymerisation von Olefinen beschrieben, beispielsweise in J. Organomet. Chem. 497(1995)181, Angew. Chem. 104(1992)1373, EPA 0 344 887, J. Mol. Catal. A. Chem. 102(1995)59, J. Am. Chem. Soc. 118(1996)2105, Macromolecules 27(1994)4477, Macromolecules 29(1996)2331 EPA 0 185 918, EPA 0 537 686, EP 0 485 820 oder EP 0 485 821.

Bei der Synthese von Metallocenen mit aromatischen π-Liganden, beispielsweise Indenylliganden, wird aufwendig die Isolierung des rac-Metallocens angestrebt, da nur mit dieser Form stereospezifisch beispielsweise isotaktisches Polypropylen hergestellt werden kann. Die meso-Form des Metallocens wird dabei abgetrennt.

In der EP-A-0 530 908 wird die Synthese von verbrückten Metallocenverbindungen beschrieben, wobei die Umsetzung des zweifach deprotonierten Liganden mit einem Übergangsmetallhalogenid in Gegenwart einer schwachen Lewisbase als Lösungsmittelbestandteil stattfindet. In WO-97/03080 wird ein Verfahren beschrieben, in dem die achirale meso-Form eines Metallocens in Gegenwart eines chiralen Hilfsreagenzes unter photochemischen Bedingungen quantitativ in die racemische Form des mit dem chiralen Hilfsreagenzes derivatisierten Metallocens umgewandelt wird.

Die Aufgabe der vorliegenden Erfindung liegt darin, eine effiziente, schnelle, kostengünstige und ausbeuteoptimierte direkte Synthese von Metallocenen bereitzustellen, mit denen hochisotaktische Polyolefine kostengünstig hergestellt werden können.

Die Aufgabe der vorliegenden Erfindung wird durch ein Verfahren zur direkten Herstellung von rac/meso-Metallocenen gelöst. Die erfindungsgemäß hergestellten rac/meso-Metallocene können überraschenderweise direkt als Katalysatorkomponente zur Olefinpolymerisation eingesetzt werden, ohne daß eine zusätzliche, kostenintensive und ausbeutemindernde Isolierung der rac-Form notwendig ist.

Demgemäß wurde ein Verfahren zur Herstellung eines rac/meso-Metallocens der Formel I mit einem rac/meso-Verhältnis von >20:1 bis <200:1 gefunden, 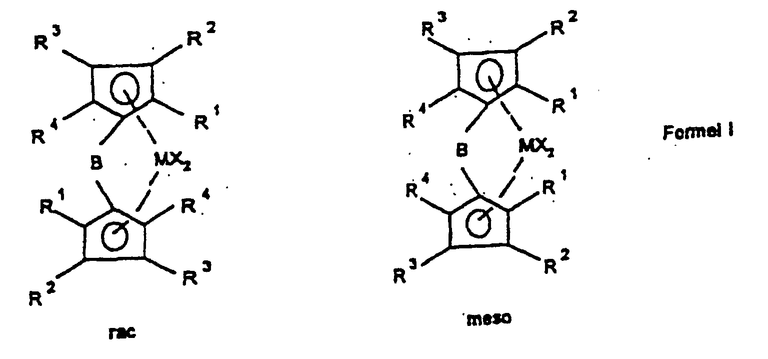 wobei
M ein Metall der Gruppen Illb, IVb, Vb oder Vlb des Periodensystems der Elemente bedeutet und bevorzugt ein Metall der Gruppe Ivb wie Ti, Zr oder Hf, besonders bevorzugt Zr und Hf bedeutet,
die Reste X gleich oder verschieden sind, bevorzugt gleich, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeuten, wobei lineares oder verzweigtes C₁-C₁₀-Alkyl und Halogenatome bevorzugt sind und Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵₃-, OSiR⁵₃- oder SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
die Reste R³ und R⁴ gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃- oder SiR⁵₃- oder PR⁵₂-Rest mit R⁵ in der Bedeutung von X bedeuten, oder die Reste R³ und R⁴ zusammen eine unsubstituierte Butadienyl-Gruppe darstellen, wobei besonders bevorzugt die Reste R³ und R⁴ Wasserstoff, lineares oder verzweigtes C₁-C₁₀-Alkyl bedeuten, oder zusammen eine unsubstituierte Butadienyl-Gruppe darstellen,
B eine Brücke zwischen den Indenylliganden bedeutet, die zum Beispiel ein- bis viergliedrig sein kann, wobei ein- und zweigliedrige Brücken bevorzugt sind, mit dem Vorbehalt, daß die Reste R¹, R², R³ und R⁴ nicht alle gleich sind und daß, wenn R³ und R⁴ zusammen eine unsubstituierte Butadienylgruppe darstellen, R¹ und R² Wasserstoff sind, enthaltend die Schritte:
   a) Umsetzung eines substituierten Cyclopentadiens der Formel A 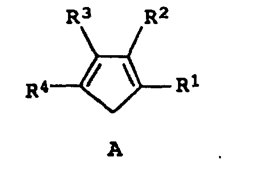 mit einem Verbrückungsreagenz BY₂ zu einem verbrückten Biscyclopentadienylligandsystem,
   b) Umsetzung des verbrückten Biscyclopentadienylligandsystems mit einem Metallhalogenid zu einem Metallocen der Formel Ia 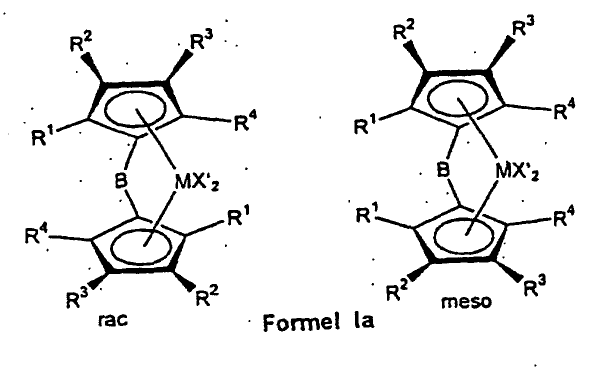 worin X' gleich Halogen ist,
   c) und optional die Umsetzung eines Metallocens der Formel Ia mit einer metallorganischen Verbindung R^{3'}M¹,
   worin M¹ eine Element der 1. bis 3. Hauptgruppe ist und R^{3'} ein ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryloder C₈-C₄₀-Arylalkenylgruppe, eine -OH-Gruppe oder ein Pseudohalogen wie Nitril bedeutet, zu einem Metallocen der Formel Ib, 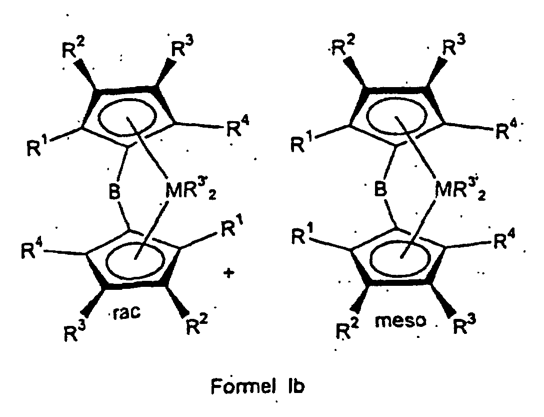 wobei alle Schritte in dem gleichen Lösungsmittel bzw. Lösungsmittelgemisch durchgeführt werden.

Außerdem betrifft die Erfindung chirale rac/meso-Metallocene der Formel I mit einem rac/meso-Verhältnis von >20:1 bis <200:1 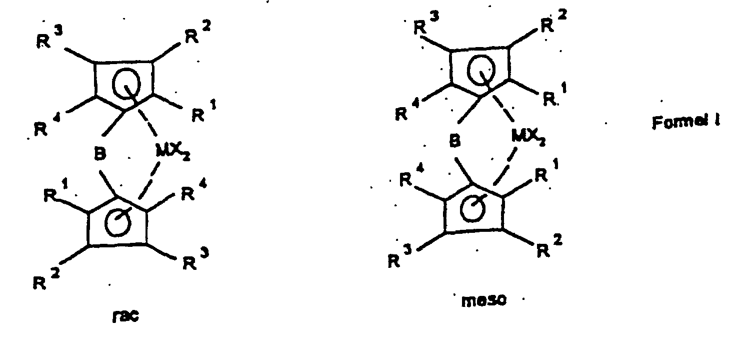 wobei
M ein Metall der Gruppen Illb, IVb, Vb oder VIb des Periodensystems der Elemente bedeutet und bevorzugt ein Metall der Gruppe IVb wie Ti, Zr oder Hf, besonders bevorzugt Zr und Hf bedeutet,
die Reste X gleich sind und lineares oder verzweigtes C₁-C₁₀-Alkyl oder ein Halogenatom bedeuten, und Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigte C₁-C₁₀-Alkyl bedeuten,
die Reste R³ und R⁴ gleich oder verschieden sind, wobei auch Reste mit gleicher Indizierung verschieden sein können, und ein Wassersoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀₋Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, doer einen NR⁵₂-, SR⁵-, OSiR⁵₃-, SiR⁵₃- oder PR⁵₂-Rest mit R⁵ in der Bedeutung von X bedeuten, oder die Reste R³ und R⁴ zusammen eine unsubstituierte Butadienyl-Gruppe darstellen, wobei besonders bevorzugt die Reste R³ und R⁴ Wasserstoff, lineares oder verzweigtes C₁-C₁₀-Alkyl bedeuten, oder zusammen eine unsubstitiuerte Butadienyl-Gruppe darstellen,
B eine Brücke zwischen den Indenylliganden bedeutet, die zum Beispiel ein- bis viergliedrig sein kann, wobei ein- und zweigliedrige Brücken bevorzugt sind, mit dem Vorbehalt, daß die Reste R¹, R², R³ und R⁴ nicht alle gleich sind und daß, wenn R³ und R⁴ zusammen eine unsubstitieurte Butadienylgruppe darstellen, R¹ und R² Wasserstoff sind.

Die Erfindung betrifft außerdem einen Katalysator, enthaltend a) mindestens ein chirales rac/meso-Metallocen der Formel I und b) mindestens einen Cokatalysator, ein Verfahren zur Polymerisation von Olefinen in Gegenwart dieses Katalysators sowie die Verwendung dieses Katalysators zur Olefinpolymerisation.

In dem erfindungsgemäßen Verfahren wird zunächst das Ligandsystem hergestellt und anschließend, ohne das verbrückte Biscyclopentadienylligandsystem zu isolieren, das rac/meso-Metallocen der Formel Ia hergestellt, das weiter zu einem rac/meso-Metallocen der Formel Ib umgesetzt werden kann.

Wie in Schema 1 illustriert, wird in dem Verfahren aus einem substituierten Cyclopentadien der Formel A, bevorzugt einem alkylsubstituierten Cyclopentadien, nach Deprotonierung mit einer starken Base wie beispielsweise Butyllithium oder Kaliumhydrid in einem geeigneten Lösungsmittel bzw. Lösungsmittelgemisch nach Zugabe eines Verbrückungsreagenzes BY₂ ein verbrücktes Biscyclopentadienylligandsystem hergestellt. Dabei ist B wie in Formel I definiert und Y ist eine Abgangsgruppe wie Halogen. Das verbrückte Biscyclopentadienylsytem wird nach weiterer Deprotonierung mit einer starken Base wie beispielsweise Butyllithium oder Kaliumhydrid mit einem Metallhalogenid der Gruppe IIIb, IVb, Vb oder VIb des Periodensystems der Elemente, bevorzugt mit den Halogeniden des Titans, Zirkoniums und Hafniums, besonders bevorzugt mit Zirkoniumtetrachlorid oder Hafniumtetrachlorid zum rac/meso-Metallocen der Formel Ia umgesetzt. Die Metallhalogenide können auch als ligandhaltige Komplexe eingesetzt werden wie beispielsweise HfCl₄(THF)₂, ZrCl₄(THF)₂, TiCl₄(THF)₂, TiCl₃(THF)₃, VCl₃(THF)₃ oder ScCl₃(THF)₃.
Die Brücke B wird durch Umsetzung des Cyclopentadienyls mit einer Verbindung der Formel BY₂ eingeführt. Bei der Verbindung BY₂ handelt es sich bevorzugt um Verbindungen wie beispielsweise (CH₃)₂SiCl₂, (CH₃)(C₅H₆)SiCl₂, CH₂Br₂, (CH₃)₂CBr₂ oder 1,2-Dibromethan.
Zur Einführung einer C₁-Brücke kann alternativ auch das entsprechende Fulven mit einem Äquivalent des metallierten Cyclopentadienyls umgesetzt werden. In diesen Fällen bedeutet B bevorzugt CH₂, C(CH₃)₂, C(CH₃)(C₆H₅) und C(C₆H₅)₂.

Geeignete Lösungsmittel für die erfindungsgemäße Eintopfsynthese sind aliphatische oder aromatische Lösungsmittel, wie beispielsweise Hexan oder Toluol oder etherische Lösungsmittel, wie beispielsweise Tetrahydrofuran (THF), Diethylether oder Dimethoxyethan (DME) sowie Lösungsmittelgemische aus oben genannten Lösungsmittelklassen wie Toluol/THF, Toluol/Hexan/THF oder Hexan/Diethylether.

Ein Vorteil dieser Lösungsmittel bzw. Lösungsmittelgemische besteht darin, daß die Umsetzung der Metallocene der Formel Ia zu Metallocenen der Formel Ib ebenfalls darin durchgeführt werden kann, ohne daß ein Lösungsmittelwechsel erforderlich ist.

Nach der Komplexsynthese kann sich die Isolierung des oben beschriebenen rac/meso-Metallocens der Formel Ia anschließen oder das rac/meso-Metallocen-enthaltende Reaktiongemisch wird direkt weiter zum rac/meso-Metallocen der Formel Ib umgesetzt.

Zur Isolierung des rac/meso-Metallocens der Formel Ia wird entweder der ausgefallene Komplex zusammen mit dem entstandenen anorganischen Salz abfiltriert oder das rac/meso-Metallocen wird in einer ausreichenden Menge der bei der Komplexsynthese eingesetzten Lösungsmittel, bevorzugt einem aromatischen Lösungsmittel wie z. B. Toluol in Lösung gehalten und von dem entstandenden anorganischen Salz durch Filtration abgetrennt.
Das als Filterkuchen isolierte rac/meso-Metallocen wird gegebenenfalls gewaschen und getrocknet. Das rac/meso-Metallocen kann anschließend von salzartigen Bestandteilen abgetrennt werden.
Das in Lösung vorliegende rac/meso-Metallocen wird gegebenenfalls vom Lösungsmittel befreit und als Feststoff isoliert.

Das rac/meso-Metallocen der Formel Ia wird mit einem rac/meso-Verhältnis von >20:1 bis <200:1, bevorzugt von >30:1 bis <100:1, besonders bevorzugt von >35:1 bis <60:1, ganz besonders bevorzugt >40:1 bis <50:1 erhalten.
Das erhaltene rac/meso-Metallocen kann in reiner Form oder als Gemisch mit weiteren Bestandteilen, wie anorganischen Salzen, oder als Lösung erhalten werden und direkt weiter in der Polymerisation als Katalysatorkomponente eingesetzt werden.
Das oben hergestellte reine bzw. mit weiteren Bestandteilen vermischte rac/meso-Metallocen der Formel Ia kann mit einer metallorganischen Verbindung R^{3'}M¹ zu einem rac/meso-Metallocen der Formel Ib umgesetzt werden.
In der Verbindung R^{3'}M¹ bedeutet M¹ ein Element der 1. bis 3. Hauptgruppe, bevorzugt Lithium, Magnesium oder Aluminium und R^{3'} hat die gleiche Bedeutung wie X in Formel I, außer Halogen. Besonders bevorzugt sind, wenn das rac/meso-Metallocen der Formel Ib isolierbar sein soll, metallorganische Verbindungen, bei denen der Rest R^{3'} kein aliphatisch gebundenes β-Wasserstoffatom trägt. Beispiele für solche Verbindungen sind Lithiumorganyle wie CH₃Li, BenzylLi und C₆H₅Li, sowie Grignardverbindungen wie CH₃MgCl, CH₃MgBr, CH₃MgI, BenzylMgBr, C₆H₅MgCl und Aluminiumorganyle wie Trimethylaluminium oder Methylaluminoxan.
Die Umsetzung erfolgt in einem gegenüber R^{3'}M¹ inerten Lösungsmittel bzw. Lösungsmittelgemisch. Geeignete Lösungsmittel sind aliphatische oder aromatische Lösungsmittel, wie beispielsweise Hexan oder Toluol, etherische Lösungsmittel, wie beispielsweise Tetrahydrofuran (THF), Diethylether oder Dimethoxyethan (DME) sowie Lösungsmittelgemische aus oben genannten Lösungsmittelklassen wie beispielsweise Toluol/THF, Toluol/DME, Toluol/Hexan/THF oder Hexan/ Diethylether.
Die Substitution der Halogenatome am Übergangsmetall wird bei einer Temperatur von - 100°C bis zum Siedepunkt des verwendeten Lösungsmittels bzw. -gemisches, bevorzugt bei einer Temperatur von - 78°C bis zum Siedepunkt des verwendeten Lösungsmittels bzw. -gemisches durchgeführt.
Nach erfolgter Umsetzung kann das rac/meso-Metallocen der Formel Ib isoliert werden oder zusammen mit weiteren Bestandteilen direkt weiter als Katalysatorkomponente in der Polymerisation eingesetzt werden.

Rac/meso-Metallocene des Typs silylverbrückte unsubstituierte Bisindenyl-Komplexe des Hafniums oder Zirkoniums werden bevorzugt folgendermaßen hergestellt.
1 Äquivalent Inden wird bei Raumtemperatur bis 50°C in einem Toluol/THF-Gemisch 100:1 bis 1:5, bevorzugt 20:1 bis 2:1 mit einer Lösung von n-Butyllithium (bevorzugt 1 Äquivalent) deprotoniert und anschließend bei -30°C bis Raumtemperatur mit einem halben Äquivalent eines alky und/oder aryl-substituierten Dichlorsilans, wie z. B. Dimethyldichlorsilan, versetzt und 1 bis 5 Stunden bei Raumtemperatur bis 60°C nachgerührt. Anschließend wird mit einem weiteren Äquivalent Butyllithium bei Raumtemperatur bis 50°C deprotoniert, 1 bis 5 Stunden bei Raumtemperatur bis 50°C nachgerührt und bei einer Temperatur von -30°C bis 50°C, bevorzugt -10°C bis Raumtemperatur, mit 0.4 bis 1 Äquivalent, bevorzugt 0.45 bis 0.75 Äquivalenten des Tetrachlorids von Zirkonium oder Hafnium umgesetzt und anschließend 1 bis 5 Stunden bei 0°C bis 60°C, bevorzugt bei Raumtemperatur bis 40°C nachgerührt.
Das rac/meso-Metallocen Dimethylsilyl-bis-indenyl-hafniumdichlorid wird aus dem oben beschriebenen Reaktionsgemisch bevorzugt durch Toluolextraktion vom Lithiumchlorid abgetrennt und nach weitestgehender Entfernung der Lösungsmittels als Niederschlag isoliert.
Zur Synthese des rac/meso-Metallocens Dimethylsilyl-bis-indenyl-hafniumdimethyl wird rac/meso-Dimethylsilyl-bis-indenyl-hafniumdichlorid, entweder nach Isolierung oder als Rohprodukt, d. h. das Reaktionsgemisch der Eintopfsynthese, mit 2 bis 3 Äquivalenten, bevorzugt 2 bis 2.2 Äquivalenten einer käuflichen Lösung eines Methylgrignards, wie Methylmagnesiumchlorid oder Methylmagnesiumbromid, bei einer Temperatur von 0°C bis 100°C umgesetzt. Rac/meso Dimethylsilyl-bis-indenyl-hafniumdimethyl wird durch Toluolextraktion von anorganischen Nebenprodukten abgetrennt und nach Entfernen des Lösungsmittels als Feststoff isoliert.

Das erfindungsgemäße Verfahren hat überraschenderweise viele Vorteile. Die Ligandsynthese und die Komplexsynthese kann im selben Reaktionsgefäß durchgeführt werden und eine anschließende weitere Umsetzung zur Substitution der Halogenatome X am Übergangsmetall M kann im gleichen Reaktionsgefäß in den gleichen Lösungsmitteln bzw. Lösungsmittelgemischen durchgeführt werden. Für den Fall, daß die rac/meso-Metallocene in reiner Form isoliert werden sollen, wird die Extraktion mit in der Synthese verwendeten Lösungsmitteln, d.h. etherischen und aromatischen Lösungsmitteln, wie z. B. THF, Benzol, Toluol, Xylol und Anisol in einem Temperaturbereich von 0°C bis 110°C, bevorzugt 40°C bis 90°C durchgeführt. Somit kann auf die üblicherweise verwendeten chlorierten Lösungsmittel, insbesondere Methylenchlorid, zur Extraktion von Metallocenen verzichtet werden.

Die im erfindungsgemäßen Verfahren hergestellten rac/meso-Metallocene sind chirale Verbindungen der Formel I in einem rac/meso-Verhältnis von bevorzugt >20:1 bis <200:1, bevorzugt von >30 bis <100, besonders bevorzugt von >35:1 bis <60:1, ganz besonders bevorzugt von >40:1 bis <50:1
wobei 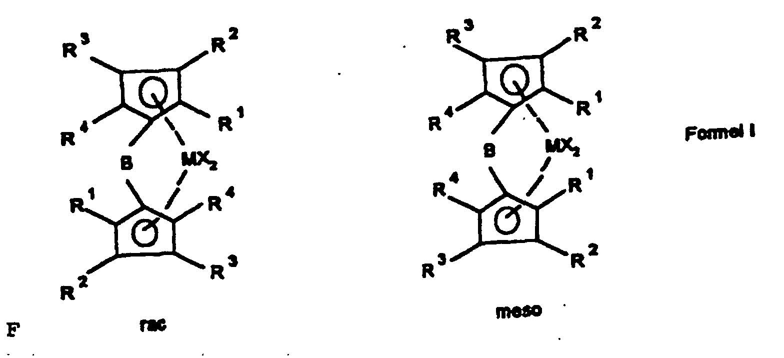
M ein Metall der Gruppen IIIb, IVb, Vb oder VIb des Periodensystems der Elemente bedeutet und bevorzugt ein Metall der Gruppe IVb wie Ti, Zr oder Hf, besonders bevorzugt Zr und Hf bedeutet,
die Reste X gleich oder verschieden sind, bevorzugt gleich, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeuten, wobei lineares oder verzweigtes C₁-C₁₀-Alkyl und Halogenatome bevorzugt sind und Chlor und Methyl ganz besonders bevorzugt sind,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
die Reste R³ und R⁴ gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, oder die Reste R³ und R⁴ zusammen eine unsubstituierte Butadienyl-Gruppe darstellen, wobei besonders bevorzugt die Reste R³ und R⁴ Wasserstoff, lineares oder verzweigtes C₁-C₁₀-Alkyl bedeuten, oder zusammen eine unsubstituierte Butadienyl-Gruppe darstellen,
B eine Brücke zwischen den Liganden bedeutet, die zum Beispiel ein- bis viergliedrig sein kann, wobei ein- und zweigliedrige Brücken bevorzugt sind mit dem Vorbehalt, daß die Reste R¹, R², R³ und R⁴ nicht alle gleich sind und daß, wenn R³ und R⁴ zusammen eine unsubstituierte Butadienyl-Gruppe darstellen, R¹ und R² Wasserstoff sind.
   Wenn R³ und R⁴ zusammen eine unsubstituierte Butadienylgruppe darstellen, stellt der mit R³ und R⁴ substituierte Cyclopentadienylligand eine am Sechsring unsubstituierte Indenylgruppe dar. Beispiele für Brücken B sind 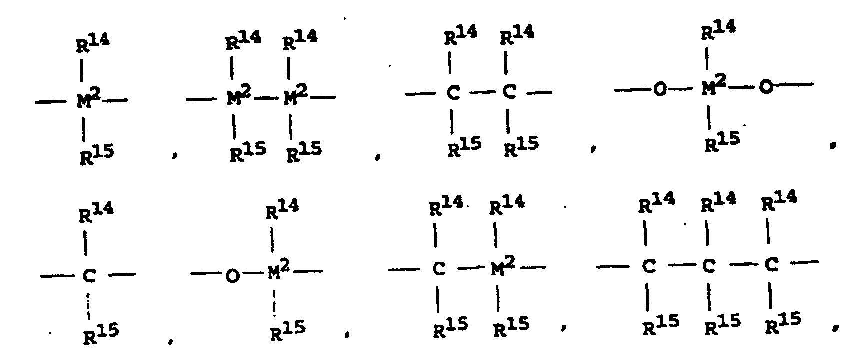 =BR¹⁴, =AlR¹⁴, -Ge-, -O-, -S-, =SO, =SO2, =NR¹⁴, =CO, =PR¹⁴ oder =P(O)R¹⁴ ist, wobei R¹⁴ und R¹⁵ gleich oder verschieden sind und ein Wasserstoffatom, ein Halogenatom oder eine C₁-C₄₀-kohlenstoffhaltige Gruppe ist wie eine C₁-C₁₀-, insbesondere C₁-C₄-Alkylgruppe, eine C₁-C₁₀-Fluoralkyl-, insbesondere CF₂-Gruppe, eine C₆-C₁₀-, insbesondere C₆-C₈-Aryl-, eine C₆-C₁₀-Fluoraryl-, insbe sondere Pentafluorphenylgruppe, eine C₁-C₁₀-, insbesondere C₁-C₄-Alkoxygruppe, insbesondere Methoxygruppe, eine C₂-C₁₀-, insbesondere C₂-C₄-Alkenylgruppe, eine C₇-C₄₀-, insbesondere C₇-C₁₀-Arylalkylgruppe, eine C₈-C₄₀-, insbesondere C₈-C₁₂-Arylalkenylgruppe, eine C₇-C₄₀-, insbesondere C₇-C₁₂-Alkylarylgruppe bedeuten oder R¹⁴ und R¹⁵ jeweils mit den sie verbindenden Atomen einen Ring bilden und M² Silizium, Germanium oder Zinn ist.

Die Brücke B bedeutet bevorzugt 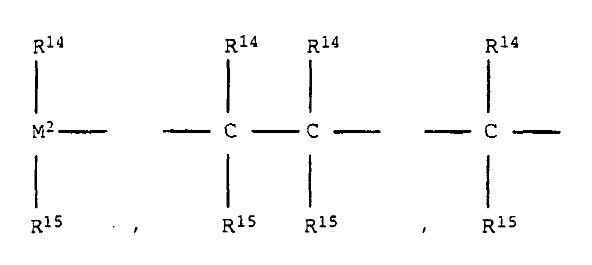 wobei M² Silizium oder Germanium ist und R¹⁴ und R¹⁵ gleich oder verschieden sind und eine C₁-C₄-Alkylgruppe oder eine C₆-C₁₀-Arylgruppe bedeuten.

R¹⁴ und R¹⁵ sind gleich oder verschieden und bedeuten bevorzugt eine C₁-C₄-Alkylgruppe, insbesondere Methylgruppe, CF₃-Gruppe, C₆-C₈-Aryl-, Pentafluorphenylgruppe, C₁-C₁₀-, C₁-C₄-Alkoxygruppe, inbesondere Methoxygruppe, C₂-C₄-Alkenylgruppe, C₇-C₁₀-Arylalkylgruppe, C₈-C₁₂-Arylalkenylgruppe, C₇-C₁₂-Alkylarylgruppe.

Besonders bevorzugt ist B eine Brücke R¹⁴R₁₅C=, R¹⁴R¹⁵Si= oder - CR¹⁴R¹⁵-CR¹⁴R¹⁵-, wobei R¹⁴ und R¹⁵ gleich oder verschieden sind und ein Wasserstoffatom, eine C₁-C₄-Alkylgruppe oder eine C₆-C₁₀-Arylgruppe bedeuten.

Die besonders bevorzugten rac/meso-Metallocene der Formel weisen Kombinationen folgender Molekülfragmente auf:
B: -CH₂-CH₂-, (H₃C)₂Si= und (H₃C)₂C=, bevorzugt (H₃C)₂Si=
MX₂: -ZrCl₂, -HfCl₂, -Zr(CH₃)₂, -Hf(CH₃)₂

Ligand (CpR¹R²R³R⁴) :
Indenyl, Monoalkylcyclopentadienyl, Dialkyl und Trialkylcyclopentadienyl, wobei die Cp-Liganden bevorzugt in 4,5-, 2,4- oder 2,3,4-Position alkylsubstituiert sind und Alkyl lineares oder verzweigtes C₁-C₁₀-Alkyl bedeutet wie Methyl, Ethyl, Propyl, Isopropyl, n-Butyl, Isobutyl, tert.-Butyl, Pentyl, isopentyl, Hexyl oder Decyl. Die Substitutionspositionen werden wie folgt benannt:

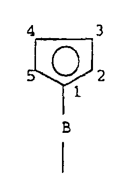

Beispiele für rac/meso-Metallocene der Formel I sind nachfolgend genannt:
rac/meso-Dimethylsilandiylbisindenylzirkondichlorid
rac/meso-Dimethylmethylenbisindenylzirkondichlorid
rac/meso-Ethandiylbisindenylzirkondichlorid
rac/meso-Dimethylsilandiylbisindenylzirkondimethyl
rac/meso-Dimethylmethylenbisindenylzirkondimethyl
rac/meso-Ethandiylbisindenylzirkondimethyl
rac/meso-Dimethylsilandiylbisindenylhafniumdichlorid
rac/meso-Dimethylmethylenbisindenylhafniumdichlorid
rac/meso-Ethandiylbisindenylhafniumdichlorid

rac/meso-Dimethylsilandiylbisindenylhafniumdimethyl
rac/meso-Dimethylmethylenbisindenylhafniumdimethyl
rac/meso-Ethandiylbisindenylhafniumdimethyl

rac/meso-Dimethylsilandiylbis(2-alkyl-1-cyclopentadienyl)zirkondichlorid
rac/meso-Dimethylmethylenbis(2-alkyl-1-cyclopentadienyl)zirkondichiorid
rac/meso-Ethandiylbis(2-alkyl-1-cyclopentadienyl)zirkondichlorid
rac/meso-Dimethylsilandiylbis(2-alkyl-1-cyclopentadienyl)zirkondimethyl
rac/meso-Dimethylmethylenbis(2-alkyl-1-cyclopentadienyl)zirkondimethyl
rac/meso-Ethandiylbis(2-alkyl-1-cyclopentadienyl)zirkondimethyl
rac/meso-Dimethylsilandiylbis(2-alkyl-1-cyclopentadienyl)hafniumdichlorid
rac/meso-Dimethylmethylenbis(2-alkyl-1-cyclopentadienyl)hafniumdichlorid
rac/meso-Ethandiylbis(2-alkyl-1-cyclopentadienyl)hafniumdichlorid
rac/meso-Dimethylsilandiylbis(2-alkyl-1-cyclopentadienyl)hafniumdimethyl
rac/meso-Dimethylmethylenbis(2-alkyl-1-cyclopentadienyl)hafniumdimethyl
rac/meso-Ethandiylbis(2-alkyl-1-cyclopentadienyl)hafniumdimethyl

rac/meso-Dimethylsilandiylbis(2,4-dialkyl-1-cyclopentadienyl)zirkondichlorid
rac/meso-Dimethylmethylenbis(2,4-dialkyl-1-cyclopentadienyl)zirkondichlorid
rac/meso-Ethandiylbis(2,4-dialkyl-1-cyclopentadienyl)zirkondichlorid
rac/meso-Dimethylsilandiylbis(2,4-dialkyl-1-cyclopentadienyl)zirkondimethyl
rac/meso-Dimethylmethylenbis(2,4-dialkyl-1-cyclopentadienyl)zirkondimethyl
rac/meso-Ethandiylbis(2,4-dialkyl-1-cyclopentadienyl)zirkondimethyl
rac/meso-Dimechylsilandiylbis(2,4-dialkyl-1-cyclopentadienyl)hafniumdichlorid
rac/meso-Dimethylmethylenbis(2,4-dialkyl-1-cyclopentadienyl)hafniumdichlorid
rac/meso-Ethandiylbis(2,4-dialkyl-1-cyclopentadienyl)hafniumdichlorid
rac/meso-Dimethylsilandiylbis(2,4-dialkyl-1-cyclopentadienyl)hafniumdimethyl
rac/meso-Dimethylmethylenbis(2,4-dialkyl-1-cyclopentadienyl)hafniumdimethyl
rac/meso-Ethandiylbis(2,4-dialkyl-1-cyclopentadienyl)hafniumdimethyl

rac/meso-Dimethylsilandiylbis(2,3,4-trialkyl-1-cyclopentadienyl)zirkondichlorid
rac/meso-Dimechylmethylenbis(2,3,4-trialkyl-1-cyclopentadienyl)zirkondichlorid
rac/meso-Ethandiylbis(2,3,4-trialkyl-1-cyclopentadienyl)zirkondichlorid
rac/meso-Dimethylsilandiylbis(2,3,4-trialkyl-1-cyclopentadienyl)zirkondimethyl
rac/meso-Dimethylmethylenbis(2,3,4-trialkyl-1-cyclopentadienyl)zirkondimethyl
rac/meso-Ethandiylbis(2,3,4-trialkyl-1-cyclopentadienyl)zirkondimethyl
rac/meso-Dimethylsilandiylbis(2,3,4-trialkyl-1-cyciopentadienyl)hafniumdichlorid
rac/meso-Dimethylmethylenbis(2,3,4-trialkyl-1-cyclopentadienyl) hafniumdichlorid
rac/meso-Ethandiylbis(2,3,4-trialkyl-1-cyclopentadienyl)hafniumdichlorid
rac/meso-Dimethylsilandiylbis(2,3,4-trialkyl-1-cyclopentadienyl)hafniumdimethyl
rac/meso-Dimethylmethylenbis(2,3,4-trialkyl-1-cyclopentadienyl)hafniumdimethyl
rac/meso-Ethandiylbis(2,3,4-trialkyl-1-cyclopentadienyl)hafniumdimethyl

In den vorstehend genannten Metallocenen hat Alkyl die Bedeutung von linearem oder verzweigtem C₁-C₁₀-Alkyl wie Methyl, Ethyl, Propyl, Isopropyl, n-Butyl, Isobutyl, tert.-Butyl, Pentyl, Isopentyl, Hexyl oder Decyl. Bei den Dialky- beziehungsweise Trialkylsubstituierten Metallocenen können die Alkylreste gleich oder verschieden sein. So umfaßt rac/meso-Dimethylsilandiylbis(2,4-dialkyl-1-cyclopentadienyl)zirkondichlorid z.B. die Metallocene rac/meso-Dimethylsilandiyl-bis(2-methyl-4-t-butyl-1-cyclopentadienyl)zirkondichlorid oder auch rac/meso-Dimethylsilandiylbis(2,4-dimethyl-1-cyclopentadienyl)zirkondichlorid.

Bevorzugt sind auch die in den Ausführungsbeispielen verwendeten Metallocene der Formel I.

Die erfindungsgemäßen rac/meso-Metallocene können überraschenderweise direkt als Katalysatorkomponente zur Herstellung hochisotaktischer Polyolefine eingesetzt werden, ohne daß eine Isolierung der rac-Form notwendig ist. Ein solches Katalysatorsystem enthält mindestens einen Cokatalysator und mindestens ein rac/meso-Metallocen. Es können auch Metallocen-Mischungen verwendet werden, z. B. Mischungen von zwei oder mehr rac/meso-Metallocenen der Formel I oder Mischungen eines oder mehrerer rac/meso-Metallocene der Formel I mit einem oder mehreren davon verschiedenen Metallocenen wie einem Bis-indenyl-Metallocen, das im Sechsring des Indenylliganden substituiert ist. Solche sechsringsubstituierten Metallocene sind z. B. in EP-A-0 646 604 beschrieben. Darüberhinaus kann das rac/meso-Metallocen auch in geträgerter Form zur Olefinpolymerisation eingesetzt werden.

Die Cokatalysatorkomponente, die im Katalysatorsystem enthalten sein kann, enthält mindestens eine Verbindung vom Typ eines Aluminoxans oder einer anderen Lewis-Säure oder eine ionische nichtkoordinierende Verbindung, die durch Reaktion mit einem Metallocen dieses in eine kationische Verbindung überführt. Als Aluminoxan wird bevorzugt eine Verbindung der allgemeinen Formel II

(R AlO)ₚ (II)

verwendet. Aluminoxane können cyclisch wie in Formel III 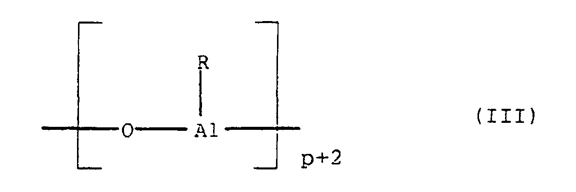 oder linear wie in Formel IV 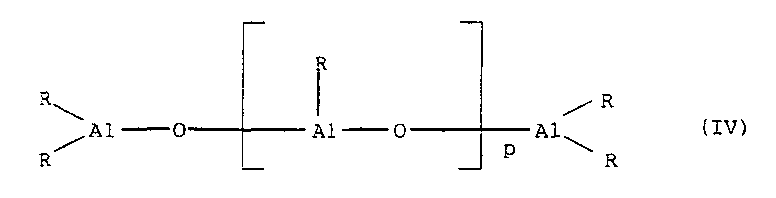 oder vom Cluster-Typ wie in Formel V sein, wie sie in neuerer Literatur beschrieben werden, vgl. JACS 117 (1995), 6465-74, Organometallics 13 (1994), 2957-1969.

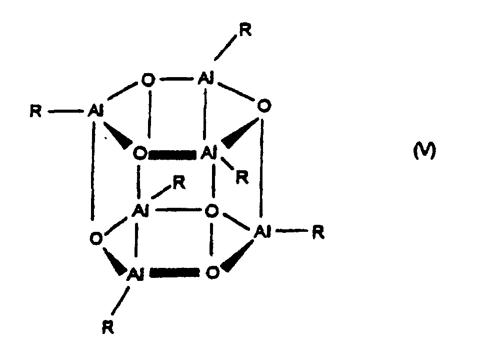

Die Reste R in den Formeln (II), (III), (IV) und (V) können gleich oder verschieden sein und eine C₁-C₂₀-Kohlenwasserstoffgruppe wie eine C₁-C₁₀-Alkylgruppe, eine C₆-C₂₀-Arylgruppe oder Wasserstoff bedeuten, und p eine ganze Zahl von 2 bis 20, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff oder Isobutyl oder n-Butyl bevorzugt zu 0,01 bis 40 % (Zahl der Reste R) enthalten sind.

Das Aluminoxan kann auf verschiedene Arten hergestellt werden. Nach einer bekannten Methoden wird eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel, wie Toluol, umgesetzt. Zur Herstellung eines Aluminoxans mit verschiedenen Alkylgruppen R werden entsprechend der gewünschten Zusammensetzung und Reaktivität zwei verschiedene Aluminiumtrialkyle (AlR₃ + AlR'₃) mit Wasser umgesetzt (vgl. S. Pasynklewicz, Polyhedron 9 (1990) 429 und EP-A-302 424).

Unabhängig von der Art der Herstellung ist allen Aluminoxanlösungen ein wechselnder Gehalt an nicht umgesetzter Aluminiumausgangsverbindungen, die in freier From oder als Addukt vorliegt, gemeinsam.

Als Lewis-Säure werden außer Aluminoxan z. B. auch andere aluminiumorganische Verbindungen oder bororganische Verbindungen verstanden, die C₁-C₂₀-kohlenstoffhaltige Gruppen enthalten, wie verzweigte oder unverzweigte Alky- oder Halogenalkyl, wie Methyl, Propyl, Isopropyl, Isobutyl, Trifluormethyl, ungesättigte Gruppen, wie Aryl oder Halogenaryl, wie Phenyl, Toloyl, Benzylgruppen, p-Fluorphenyl, 3,5-Difluorophenyl, Pentachlorphenyl, Pentafluorophenyl, 3,4,5-Trifluorophenyl und 3,5-Di(trifluoromethyl)phenyl.

Besonders bevorzugt sind bororganische Verbindungen. Beispiele für solche bororganischen Verbindungen sind Trifluorboran, Triphenylboran, Tris (4-fluorophenyl)boran, Tris(3,5-difluorophenyl)boran, Tris(4-fluorophenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Besonders bevorzugt ist Tris(pentafluorophenyl)boran.

Als ionische nichtkoordinierende Cokatalysatoren werden z. B. Verbindungen verstanden, die ein nicht koordierendes Anion enthalten, wie Tetrakis(pentafluorophenyl)borate, Tetraphenylborate, SbF₆-, CF₃SO₃- oder ClO₄-. Als kationisches Gegenion werden LewisSäuren wie Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche ionischen Verbindungen sind Triethylammoniumtetra(phenyl)borat, Tributylammoniumtetra(phenyl)borat, Trimethylammoniumtetra(phenyl)borat, Tributylammoniumtetra(tolyl)borat, Tributylammoniumtetra(pentafluorophenyl)borat, Tributylammoniumtetra(pentafluorophenyl)aluminat, Tripropylammoniumtetra(dimethylphenyl)borat, Tributylammoniumtetra(trifluoromethylphenyl)borat, Tributylammoniumtetra(4-fluorophenyl)borat, N,N-Dimethylanilintetra(phenyl)borat, N,N-Diethylaniliniumtetra(phenyl)borat, N,N-dimethylaniliniumtetrakis(pentafluorophenyl)borate, N,N-Dimethylaniliniumtetrakis(pentafluorophenyl)aluminat, Di(propyl)ammoniumtetrakis(pentafluorophenyl)borat, Di(cyclohexyl)ammoniumtetrakis(pentafluorophenyl)borat, Triphenylphosphoniumtetrakis(phenyl)borat, Triethylphosphoniumtetrakis(phenyl)borat, Diphenylphosphoniumtetrakis(phenyl)borat, Tri(methylphenyl)phosphoniumetrakis(phenyl)borat, Tri(dimethylphenyl)phosphoniumtetrakis(phenyl)borat, Triphenylcarbeniumtetrakis(pentafluorophenyl)borat, Triphenylcarbeniumtetrakis(pentafluorophenyl) aluminat, Triphenylcarbeniumtetrakis(phenyl)aluminat, Ferroceniumtetrakis(pentafluorophenyl)borat und/oder Ferroceniumtetrakis(pentafluorophenyl)aluminat.
Bevorzugt sind Triphenylcarbeniumtetrakis(pentafluorophenyl)borat und/oder N,N-Dimethylaniliniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie 7,8-Dicarbaundecarboran(13), Undecahydrid-7,8-dimethyl-dicarbaundecaboran, Dodecahydrid-1-phenyl-1,3-dicarbonaboran, Tri(butyl)ammoniumdecahydrid-8-ethyl-7,9-dicarbaundecaborat, 4-Carbanonaboran(14)Bis(tri(butyl)ammonium)nonaborat, Bis(tri(butyl)ammonium)undecaborat, Bis(tri(butyl)ammonium)dodecaborat, Bis(tri(butyl)ammonium)decachlorodecaborat, Tri(butyl)ammonium-1-carbadecaborate, Tri(butyl)ammonium-1-carbadodecaborate, Tri(butyl)ammonium-1-trimethylsilyl-1-carbadecaborate, Tri(butyl)ammoniumbis(nonahydrid-1,3-dicarbonnonaborat)cobaltate(III), Tri(butyl)ammoniumbis(undecahydrid-7,8-dicarbaundecaborat)ferrat(III)
von Bedeutung.

Das rac/meso-Metallocen/Cokatalysatorsystem kann ungeträgert oder bevorzugt auch geträgert in der Olefinpolymerisation eingesetzt werden.

Die Trägerkomponente des erfindungsgemäßen Katalysatorsystems kann ein beliebiger organischer oder anorganischer, inerter Feststoff sein, insbesondere ein poröser Träger wie Talk, anorganischer Oxide oder feinteilige Polymerpulver, wie Polyolefine.

Geeignet sind anorganische Oxide von Elementen der Gruppen 2,3, 4, 5, 13, 14, 15 und 16 das Periodensystem der Elemente. Beispiele für als Träger bevorzugte Oxide umfasssen Siliciumdioxid, Aluminiumoxid, sowie Mischoxide der beiden Elemente und entsprechende Oxid-Mischungen. Andere anorganische Oxide, die allein oder in Kombination mit den zuletzt genannten bevorzugten oxiden Trägern eingesetzt werden kölnnen, sind MgO, ZrO₂ oder B₂O₃, um nur einige zu nennen.

Die verwendeten Trägermaterialien weisen eine spezfische Oberfläche im Bereich von 10 m²/g bis 1000 m²/g, ein Porenvolumen im Bereich von 0,1 ml/g bis 5 ml/g und eine mittlere Partikelgröße von 1 µm bis 500 µm auf. Bevorzugt sind Träger mit einer spezfischen Oberfläche im Bereich von 50 µm bis 500 µm, einem Porenvolumen im Bereich zwischen 0,5 ml/g und 3,5 ml/g und einer mittleren Partikelgröße im Bereich von 5 µm bis 350 µm. Besonders bevorzugt sind Träger mit einer spezifischen Oberfläche im Bereich von 200 m²/g bis 400 m²/g, einem Porenvolumen im Bereich zwischen 0,8 ml/g bis 3,0 ml/g und einer mittleren Partikelgröße von 10 µm bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Der Gewichtsverlust beim Glühen (LOI = Loss on ignition) sollte 1 % oder weniger betragen. Die thermische Dehydratisierung oder Trocknung des Trägermaterials kann unter Vakuum und gleichzeitiger Inertgasüberlagerung, wie Stickstoff, erfolgen. Die Trocknungstemperatur liegt im Bereich zwischen 100°C und 1000°C, vorzugsweise zwischen 200°C und 800°C. Der Parameter Druck ist in diesem Fall nicht entscheidend. Die Dauer des Trocknungsprozessess kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischen Wege möglich, indem das adsorbierte Wasser und die Hydroxylgruppe auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium-, Bor und Magnesium wie Trimethylaluminium, Triethylaluminium, Triisobutylaluminium, Triethylboran, Dibutylmagnesium oder auch Aluminocene wie Methylaluminocan. Die chemische Dehydratisierung oder Inertisierung des Trägermaterials kann dadurch erfolgen, daß man unter Luft- und Feuchtigkeitsausschluß eine Suspension des Trägermaterials in einem geeigenten Lösemittel mit dem Inertisierungsreagenz in reiner Form oder gelöst in einem geeigneten Lösemittel zur Reaktion bringt. Geeignete Lösemittel sind aliphatische oder aromatische Kohlenwasserstoff, wie Pentan, Hexan, Heptan, Toluol oder Xylol. Die Inertisierung erfolgt bei Temperaturen zwischen 25°C und 120°C, bevorzugt zwischen 50°C und 70°C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver, wie Polyethylen, Polypropylen oder Polystyrol, können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems kann beispielsweise mindestens eine der oben beschriebenen rac/meso-Metallocen-Kömponenten in einem geeigneten Lösemittel mit der Cokatalysatorkomponente in Kontakt gebracht, um ein lösliches Reaktionsprodukt zu erhalten. Das lösliche Reaktionsprodukt wird dann zum dehydratisierten oder inertisierten Trägermaterial gegeben, das Lösemittel entfernt und das resultierende geträgerte rac/ meso-Metallocen-Katalysatorsystem getrocknet, um sicherzustellen, daß das Lösemittel vollständig oder zum größen Teil aus den Poren des Trägermaterials entfernt wird. Der geträgerte Katalysator wird als frei fließendes Pulver erhalten.

Alternativ zu oben beschriebenen Trägerungsverfahren sind auch andere Zugabereihenfolgen von rac/meso-Metallocenen, Cokatalysatoren und Träger möglich.

Ein Verfahren zur Darstellung eines frei fließenden und gegebenenfalls vorpolymerisierten geträgerten Katalysatorsystems umfaßt die folgende Schritte
- a): Herstellung einer voraktivierten rac/meso-Metallocene/Cokatalysator-Mischung in einem geeigenten Lösemittel, wobei die rac/meso-Metallocen-Komponente eine der zuvor beschriebenen Strukturen besitzt.
- b): Aufbringen der voraktivierten rac/meso-Metallocen/Cokatalysatorlösung auf einen porösen, im allgemeinen anorganischen dehydratisierten Träger
- c): Entfernen des Hauptanteils an Lösemittel von der resultierenden Mischung
- d): Isolierung des geträgerten Katalysatorsystems
- e): Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der voraktivierten rac/meso-Metallocen-Cokatalysator-Mischung sind Kohlenwasserstoff und Kohlenwasserstoffgemische, die bei der gewählten Reaktionstemperatur flüssig und in denen sich die Einzelkomponente bevorzugt lösen. Die Löslichkeit der Einzelkomponenten ist aber keine Voraussetzung, wenn sichergestellt ist, daß das Reaktionsprodukt aus rac/meso-Metallocen- und Cokatalysatorkomponente in dem gewählten Lösemittel löslich ist. Beispiele für geeignete Lösemittel umfassen Alkane wie Pentan, Isopentan, Hexan, Heptan, Octan, und Nonan, Cycloalkane wie Cyclopentan und Cyclohexan, und Aromaten wie Benzol, Toluol, Ethylbenzol und Diethylbenzol. Ganz besonders bevorzugt ist Toluol.

Die bei der Präparation des geträgerten Katalysatorsystems eingesetzten Mengen an Cokatalysatoren wie Aluminoxan und rac/meso-Metallocen können über einen weiten Bereich variiert werden. Bevorzugt wird im Falle von Aluminoxan ein molares Verhältnis von Aluminium zum Übergangsmetall im Metallocen von 10:1 bis 1000:1 eingestellt, ganz besonders bevorzugt ein Verhältnis von 50:1 bis 500:1. Im Fall von Methylaluminoxan werden bevorzugt 30%ige toluolische Lösungen eingesetzt, die Verwendung von 10%igen Lösungen ist aber auch möglich.

Das erfindungsgemäße rac/meso-Metallocen kann voraktiviert werden. Zur Voraktivierung kann das rac/meso-Metallocen in Form eines Feststoffes in einer Lösung des Cokatalysators wie Aluminoxan in einem geeigneten Lösemittel aufgelöst. Es ist auch möglich, das rac/meso-Metallocen getrennt in einem geeigneten Lösemittel aufzulösen und diese Lösung anschließend mit der Cokatalysator-Lösung wie Aluminoxan-Lösung zu vereinigen. Es ist ebenfalls möglich, das in der Metallocensynthese erhaltene rac/meso-Metallocen-haltige Reaktionsgemisch mit der Cokatalysatorlösung, z. B. Aluminoxanlösung zu vereinigen. Bevorzugt wird Toluol als Lösungsmittel verwendet. Die Voraktivierungszeit beträgt 1 Minute bis 200 Stunden. Die Voraktivierung kann bei Raumtemperatur (25°C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50°C und 100°C.

Die voraktivierte Lösung kann anschließend mit einem inerten Trägermaterial, üblicherweise Kieselgel, das in Form eines trockenen Pulvers oder als Suspension in einem der oben genannten Lösemittel vorliegt, vereinigt werden. Bevorzugt wird das Kieselgel als Pulver eingesetzt. Die Reihenfolge der Zugabe ist dabei beliebig. Die voraktivierte Metallocen-Cokatalysator-Lösung kann zum vorgelegten Trägermaterial dosiert, oder aber das Trägermaterial in die vorgelegte Lösung eingetragen werden.

Das Volumen der voraktivierten Lösung kann 100 % des Gesamtporenvolumens des eingesetzten Trägermaterials überschreiten oder aber bis zu 100 % des Gesamtporenvolumens betragen. Bevorzugt ist dabei ein Bereich von 100 bis 500 %, besonders bevorzugt 110 bis 300 % des Gesamtporenvolumens oder aber 50 % bis 100 % bwz. bevorzugt 70 bis 95 %.

Die Temperatur, bei der die voraktivierte Lösung mit dem Trägermaterial in Kontakt gebracht wird, kann im Bereich zwischen 0°C und 100°C variieren. Niedrigere oder höhere Temperaturen sind aber auch möglich. Nach der Vereinigung von Trägermaterial und Lösung wird die Mischung noch etwa Minute bis 1 Stunde, bevorzugt 5 Minuten bei dieser Temperatur genalten.

Anschließend wird das Lösemittel vollständig oder zum größen Teil vom geträgerten Katalysatorsystem entfernt, wobei die Mischung gerührt und gegebenenfalls auch erhitzt werden kann. Bevorzugt wird sowhl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungvorgang kann die Mischung erwärmt werden, bis das freie Lösemittel entfernt worden ist, was üblicherweise 1 bis 3 Stunden bei einer vorzugsweise gewählten Temperatur zwischen 30°C und 60°C erfordert. Das freie Lösemittel ist der sichtbare Anteil an Lösemittel in der Mischung. Unter Restlösemittel versteht man den Anteil, der in den Poren eingeschlossen ist.

Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoffrest wie Pentan oder Hexan gewaschen und erneut getrocknet werden.

Das geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Dazu wird beispielsweise das geträgerte Katalysatorsystem in einem inerten Kohlenwasserstoff wie etwa Hexan suspendiert und bei einer Temperatur von 0°C bis 60°C in Gegenwart von mindestens einem Olefin wie beispielsweise Ethylen, Propylen, Hexen, Buten oder 4-Methyl-1-penten vorpolymersiert. Anschließend kann das vorpolymerisierte Katalysatorsystem bis zur Rieselfähigkeit getrocknet werden. Alternativ kann auch diese Suspension direkt für die Polymerisation verwendet werden. Eine weitere mögliche Ausgestaltungsvariante besteht darin, das Katalysatorsystem in der Gasphase vorzupolymerisieren. Dazu wird unter Rührung mindestens ein Olefin obiger Bedeutung durch das in Pulverform vorliegende Katalysatorsystem geleitet.

Als Additiv kann während oder nach der Herstellung des geträgerten Katalysatorsystems eine geringe Menge eines α-Olefins, wie Styrol, als aktivitätssteigernde Komponente oder eines Antistatikums, wie in US Serial No. 08/365280 beschrieben, zugesetzt werden. Die vorliegende Erfindung betrifft auch ein Verfahren zur Herstellung eines Polyolefins durch Polymerisation einer oder mehrerer Olefine in Gegenwart des erfindungsgemäßen Katalysatorsystems enthaltend mindestens ein rac/meso- Metallocen der Formel I. Unter dem Begriff Polymerisation wird eine Homopolymerisation wie auch eine Copolymerisation verstanden.

Das geträgerte Katalysatorsystem kann für die Polymerisation von Olefinen in Kombination mit einem Aluminiumalkyl oder einem Aluminoxan als Scavenger eingesetzt werden. Die löslichen Aluminiumkomponenten werden dem Monomeren zugesetzt und diente zur Reinigung des Monomeren von Substanzen, die die Katalysatoraktivität beeinträchtigen können. Die Menge der zugesetzten Aluminiumkomponente hängt von der Qualität der eingesetzten Monomere ab.

Bevorzugt werden Olefine der Formel Ra-CH=CH-Rb polymerisiert, worin Ra und Rb gleich oder verschieden sind und ein Wasserstoffatom oder einen kohlenstoffhaltigen Rest mit 1 bis 20 C-Atomen, insbesondere 1 bis 10 C-Atome, bedeuten, und Ra und Rb zusammen mit den sie verbindenden Atomen einen oder mehrere Ringe bilden können.

Beispiele für solche Olefine sind 1-Olefine mit 2 bis 40, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen, Norbornadien, Ethylnorbornadien und cyclische Olefine wie Norbornen, Tetracyclododecen oder Methylnorbornen. Bevorzugt werden in dem erfindungsgemäßen Verfahren Propen oder Ethen homopolymerisiert, oder Propen mit Ethen und/oder mit einem oder mehreren 1-Olefinen mit 4 bis 20 C-Atomen, wie Hexen, und/oder einem oder mehreren Dienen mit 4 bis 20 C-Atomen, wie 1,4-Butadien, Norbornadien, Ethylidennorbornen oder Ethylnorbornadien, copolymerisiert. Beispiele solcher Copolymere sind Ethylen/Propen-Copolymere oder Ethen/Propen/1,4-Hexadien-Terpolymere.

Die Polymerisation wird bei einer Temperatur von -60°C bis 300°C, bevorzugt 50°C bis 200°C, ganz besonders 50°C bis 80°C durchgeführt. Der Druck beträgt 0,5 bar bis 2000 bar, bevorzugt 5 bar bis 64 bar.

Die Polymerisation kann in Lösung, in Masse, in Suspension oder in der Gasphase kontinuierlich oder diskontinuierlich, ein- oder mehrstufig durchgeführt werden.

Als Molmassenregler und/oder zur Steigerung der Aktivität wird, falls erforderlich, Wasserstoff zugegeben.

Die mit dem erfindungsgemäßen Katalysatorsystem hergestellten Polymere zeigen eine gleichmäßige Kornmorphologie und weisen keine Feinkornanteile auf. Bei der Polymerisation mit dem erfindungsgemäßen Katalysatorsystem treten keine Beläge oder Verbackungen auf.

Mit dem erfindungsgemäßen Katalysatorsystem können hochisotaktische Polyolefine, wie Polypropylen mit hoher Stereo- und Regiospezirität erhalten werden.

Die Erfindung wird anhand der nachfolgenden Beispiele näher erläutert.

Alle Glasgeräte wurden im Vakuum ausgeheizt und mit Argon gespült. Alle Operationen wurden unter Ausschluß von Feuchtigkeit und Sauerstoff in Schlenkgefäßen durchgeführt. Die verwendeten Lösemittel wurden unter Argon jeweils frisch über Na/K-Legierung destilliert und in Schlenkgefäßen aufbewahrt.

Es bedeuten:
- VZ =: Viskositätszahl in cm3/g
- M_{w} =: Molmassengewichtmittel in g/mol (ermittelt durch Gelpermeationschromatographie)
- M_{w}/Mₙ =: Molmassendispersität
- Schmp. =: Schmelzpunkt in °C (ermittelt mit DSC, 20°C/min. Aufheiz/Abkühlgeschwindigkeit
- II =: Isotaktischer Index (II = num + 0,5)
- nᵢₛₒ =: (niso = 1 + [2 mm/mr]
II und nᵢₛₒ ermittelt durch ¹³C-NMR-Spektroskopie

### Synthese von rac/meso-Metallocenen

### Beispiel A

### rac/meso-Dimethylsilandiylbisindenylhafniumdimethyl (1)

23.6 g (44 mmol) rac/meso-Dimethylsilandiylbisindenylhafniumdichlorid (1) wurden in 700 ml Toluol vorgelegt und nach Zugabe von 30 ml (90 mmol) einer 3 molaren Methylmagnesiumbromid-Lösung in Diethylether wurde das entstandene Lithiumbromid abfiltriert. Nach weitestgehendem Entfernen des Lösungsmittels kristallisiert rac/meso-Dimethylsilandiylbisindenylhafniumdimethyl (2) als gelber Feststoff aus. Nach Isolierung wurden 16.1 g (56 %) (2) (rac/meso 36:1) erhalten.

### Beispiel B

### rac/meso-Dimethylsilandiylbisindenylzirkoniumdichlorid (2)

Eine Lösung von 50 g (387 mmol) Inden (90 %ig) in 320 ml Toluol und 48 ml THF wurde bei Raumtemperatur mit 150 ml (400 mmol) einer 20 % Lösung von Butyllithium in Toluol versetzt und für eine Stunde bei Raumtemperatur nachgerührt. Anschließend wurde die Suspension auf - 10°C gekühlt und mit 23.5 ml (200 mmol) Dimethyldichlorsilan versetzt. Nach einer einstündigen Nachrührzeit wurden 150 ml (400 mmol) einer 20 % Lösung von Butyllithium in Toluol zugegeben, und das Reaktionsgemisch wurde 1 Stunde nachgerührt. 46 g (197 mmol) Zirkoniumtetrachlorid wurden zum Reaktionsgemisch gegeben, die orange Suspension 2 Stunden bei Raumtemperatur nachgerührt, filtriert und mit 100 ml THF nachgewaschen. Der Filterkuchen wurde isoliert und getrocknet und von einer repräsentativen Probe wurde ein 1H-NMR aufgenommen. (2) wurde mit einem rac/meso-Verhältnis von 32:1 erhalten.

### Polymerisationsbeispiele

### Beispiel 1

Ein trockener 24 dm³-Reaktor wurde mit Propylen gespült und mit 12 dm³ flüssigem Propylen und 25 cm³ toluolischer Methylaluminoxanlösung (entsprechend 37 mmol Al , mittlerer Oligomerisierungsgrad war p = 22) befüllt. Der Inhalt wurde bei 30°C 5 Minuten bei 250 Upm gerührt. Parallel dazu wurden 25 mg des Metallocens (1) aus Beispiel A, Dimethylsilandiylbis(1-indenyl)hafniumdimethyl als rac/meso = 36:1-Mischung in 10 cm3 toluolischer Methylaluminoxanlösung (17 mmol Al) gelöst und durch 5 minütiges Stehenlassen voraktiviert. Die Lösung wurde in den Reaktor gegeben und es wurde eine Stunde bei 70°C polymerisiert.
Es wurden 1,45 kg Polymer erhalten. Die Metallocenaktivität betrug 58.0 kgPP/gMet.
Am Polymeren wurden folgende Eigenschaften ermittelt:
VZ= 165 cm³/g; Molmasse M_{w} = 172000 g/mol, M_{w}/Mₙ = 2,2; Schmelzpunkt 144°C;
II = 94,7 %; nᵢₛₒ = 43.

### Beispiel 2

Ein trockener 24 dm³-Reaktor wurde mit Propylen gespült und mit 12 dm³ flüssigem Propylen und 25 cm³ toluolischer Methylaluminoxanlösung (entsprechend 37 mmol Al , mittlerer Oligomerisierungsgrad war p = 22) befüllt. Der Inhalt wurde bei 30°C 5 Minuten bei 250 Upm gerührt. Parallel dazu wurden 1,5 mg des Metallocens (2) aus Beispiel B, Dimethylsilandiylbis(1-indenyl)zirkondichlorid als rac/meso = 32:1-Mischung in 10 cm³ toluolischer Methylaluminoxanlösung (17 mmol Al) gelöst und durch 5 minütiges Stehenlassen voraktiviert. Die Lösung wurde in den Reaktor gegeben und es wurde eine Stunde bei 70°C polymerisiert.
Es wurden 1,06 kg Polymer erhalten. Die Metallocenaktivität betrug 705 kgPP/gMet.
Am Polymeren wurden folgende Eigenschaften ermittelt:
VZ= 47 cm³/g; Molmasse M_{w} = 39800 g/mol, M_{w}/Mₙ = 2,0; Schmelzpunkt 145°C;
II = 95,1 %; nᵢₛₒ = 46.

### Beispiel 3

### Darstellung des geträgerten Katalysatorsystems:

193 mg (0.36 mmol) Dimethylsilandiylbisindenylhafniumdimethyl (rac/meso 36:1, Verbindung (1) aus Beispiel A) wurden bei Raumtemperatur in 18 cm³ (84 mmol Al) 30%iger toluolischer Methylaluminoxan-Lösungl) gelöst. Der Ansatz wurde mit 50 cm³ Toluol verdünnt und 10 min bei 25°C gerührt. In diese Lösung wurden 15 g SiO₂²) langsam eingetragen. Nach beendeter Zugabe wurde der Ansatz 5 min bei Raumtemperatur gerührt. Anschließend wurde der Ansatz innerhalb von 2 h bei 40°C unter Vakuum bis zur Trockne eingeengt und der Rückstand 5 h bei 25°C und 10⁻³ mbar getrocknet. Es wurden 22 g eines frei fließenden, orangefarbenen Pulvers erhalten, das laut Elementaranalyse 0.30 Gew.-% Hf und 10,2 Gew.-% Al enthielt.

### Polymerisation:

Ein trockener 16 dm³ -Reaktor, der zunächst mit Stickstoff und anschließend mit Propen gespült worden war, wurde mit 10 dm³ flussigem Propen gefüllt. Als Scavenger wurden 8 cm³ 20%iger Triethylaluminium-Lösung in Varsol (Witco) zugesetzt und der Ansatz 15 min bei 30°C gerührt. Anschließend wurde eine Suspension von 1.5 g des geträgerten Metallocen-Katalysators in 20 cm³ Exxsol in den Reaktor gegeben, auf die Polymerisationstemperatur von 65°C aufgeheizt und das Polymerisationssystem 1 h bei 65°C gehalten. Die Polymerisation wurde durch Abgasen des überschüssigen Monomers gestoppt und das erhaltene Polymer im Vakuum getrocknet. Es resultierten 1.2 kg Polypropylen-Pulver.

Die Katalysatoraktivität betrug 142 kg PP / (g Met. x h) oder 1,25 kg PP /(g Kat x h).
Das dargestellte isotaktische Polypropylen wies die folgenden Eigenschaften auf:
Smp. 142°C ; M_{w} = 160 000 g/mol, M_{w}/Mₙ = 2,1, VZ = 170 cm³/g, SD = 370 g/dm³.
1) Albemarle Corporation, Baton Rouge, Louisiana, USA
2) Silica Typ MS 948 , W.R. Grace, Davison Chemical

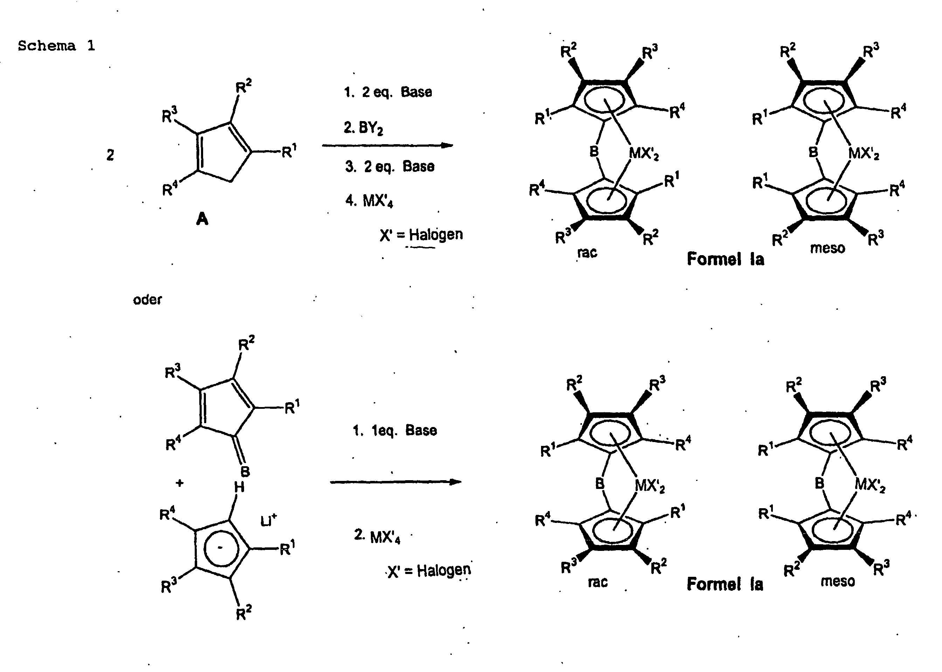

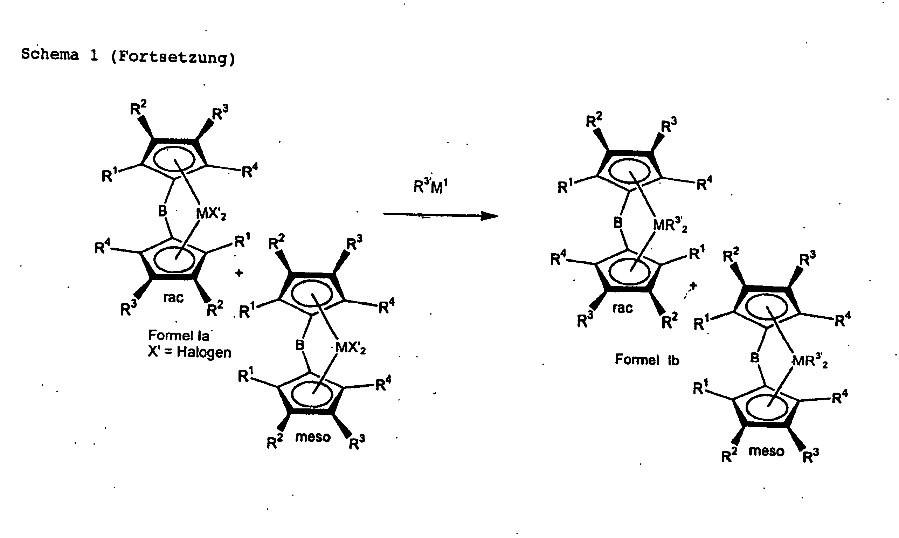

## Patentansprüche

1. Verfahren zur Herstellung eines rac/meso-Metallocens der Formel I mit einem rac/meso-Verhältnis von >20:1 bis <200:1 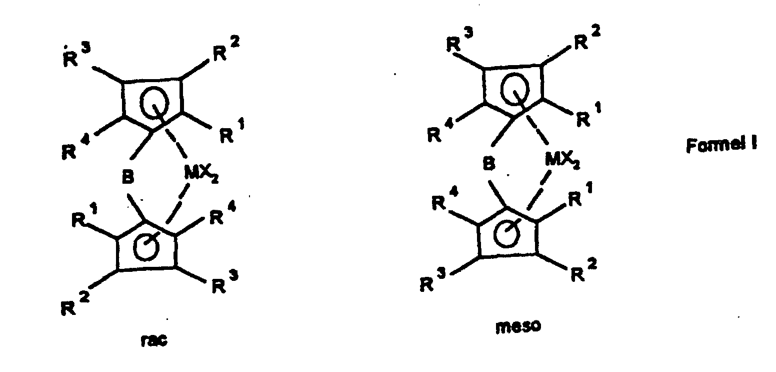 wobei
M ein Metall der Gruppen IIIb, IVb, Vb oder VIb des Periodensystems der Elemente bedeutet,
die Reste X gleich oder verschieden sind, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeuten,
die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
die Reste R³ und R⁴ gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, oder die Reste R³ und R⁴ zusammen eine unsubstituierte Butadienyl-Gruppe darstellen,
B eine Brücke zwischen den Indenylliganden bedeutet, die zum Beispiel ein- bis viergliedrig sein kann, mit dem Vorbehalt, daß die Reste R¹, R², R³ und R⁴ nicht alle gleich sind und daß, wenn R³ und R⁴ zusammen eine unsubstituierte Butadienylgruppe darstellen, R¹ und R² Wasserstoff sind, enthaltend die Schritte:
a) Umsetzung eines substituierten Cyclopentadiens der Formel A 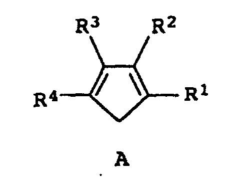 mit einem Verbrückungsreagenz BY₂ zu einem verbrückten Biscyclopentadienylligandsystem,
b) Umsetzung des verbrückten Biscyclopentadienylligandsystems mit einem Metallhalogenid zu einem Metallocen der Formel Ia 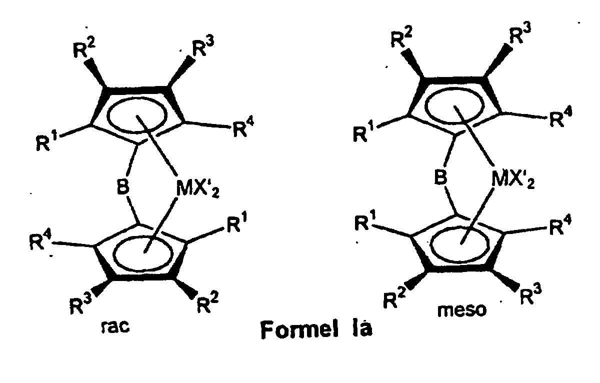 worin X' gleich Halogen ist,
c) und optional die Umsetzung eines Metallocens der Formel Ia mit einer metallorganischen Verbindung R^{3'}M¹,
worin M¹ eine Element der 1. bis 3. Hauptgruppe ist und R^{3'} ein ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril bedeutet,
zu einem Metallocen der Formel Ib, 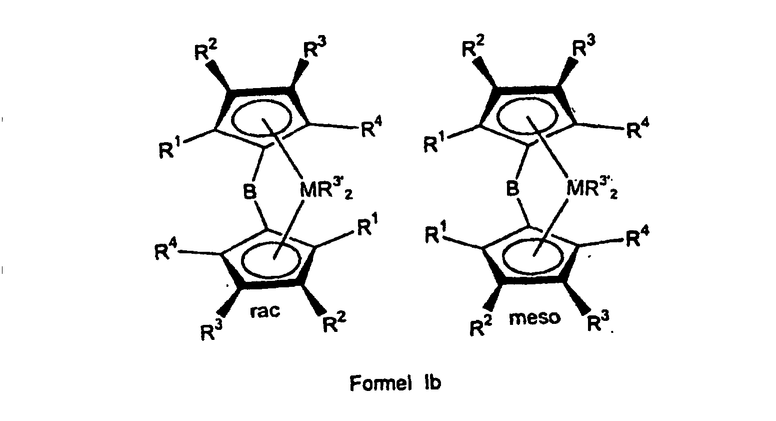 wobei alle Schritte in dem gleichen Lösungsmittel bzw. Lösungsmittelgemisch durchgeführt werden.

2. Chirales rac/meso-Metallocen der Formel I mit einem rac/meso-Verhältnis von >20:1 bis <200:1 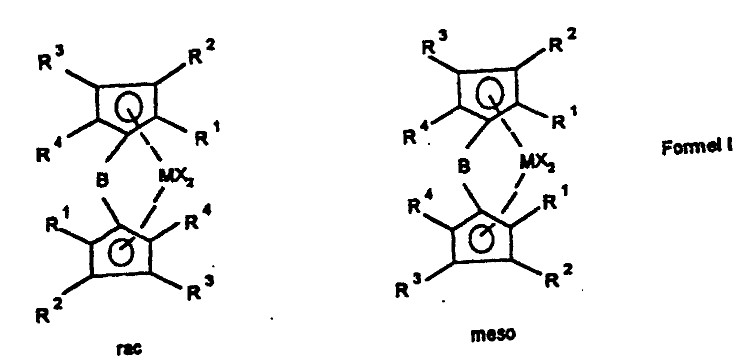 wobei
M ein Metall der Gruppen IIIb, IVb, Vb oder VIb des Periodensystems der Elemente bedeutet,
die Reste X gleich sind und lineares oder verzweigtes C₁-C₁₀-Alkyl oder ein Halogenatom bedeuten, die Reste R¹ und R² gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, wobei bevorzugt die Reste R² gleich sind und ein Wasserstoffatom bedeuten und die Reste R¹ gleich sind und Wasserstoff oder lineares oder verzweigtes C₁-C₁₀-Alkyl bedeuten,
die Reste R³ und R⁴ gleich oder verschieden sind, wobei auch Reste mit gleicher Indizierung verschieden sein können, und ein Wasserstoffatom, eine C₁-C₄₀-kohlenstoffhaltige Gruppe wie C₁-C₁₀-Alkyl-, C₁-C₁₀-Alkoxy-, C₆-C₂₀-Aryl-, C₆-C₂₀-Aryloxy-, C₂-C₁₀-Alkenyl-, C₇-C₄₀-Arylalkyl-, C₇-C₄₀-Alkylaryl- oder C₈-C₄₀-Arylalkenylgruppe, eine -OH-Gruppe, ein Halogenatom oder ein Pseudohalogen wie Nitril, oder einen NR⁵₂-, SR⁵-, OSiR⁵₃-, SiR⁵₃- oder PR⁵₂-Rest mit R⁵ in der Bedeutung von X bedeuten, oder die Reste R³ und R⁴ zusammen eine unsubstituierte Butadienyl-Gruppe darstellen, wobei besonders bevorzugt die Reste R³ und R⁴ Wasserstoff, lineares oder verzweigtes C₁-C₁₀-Alkyl bedeuten, oder zusammen eine unsubstituierte Butadienyl-Gruppe darstellen,
B eine Brücke zwischen den Indenylliganden bedeutet, die zum Beispiel ein- bis viergliedrig sein kann, mit dem Vorbehalt, daß die Reste R¹, R², R³ und R⁴ nicht alle gleich sind und daß, wenn R³ und R⁴ zusammen eine unsubstituierte Butadienylgruppe darstellen, R¹ und R² Wasserstoff sind.

3. Katalysator, enthaltend a) mindestens ein chirales rac/meso-Metallocen der Formel I gemäß Anspruch 2 und b) mindestens einen Cokatalysator.

4. Katalysator gemäß Anspruch 3, zusätzlich enthaltend einen Träger.

5. Katalysator gemäß Anspruch 3 oder 4, **dadurch gekennzeichnet, daß** er in vorpolymerisierter Form vorliegt.

6. Verfahren zur Polymerisation von Olefinen in Gegenwart eines Katalysators gemäß einem oder mehreren der Ansprüche 3 bis 5.

7. Verwendung eines Katalysators gemäß einem oder mehreren der Ansprüche 3 bis 5 zur Olefinpolymerisation.

## Claims

1. A process for preparing a rac/meso-metallocene of the formula I having a rac/meso ratio of from > 20:1 to < 200:1 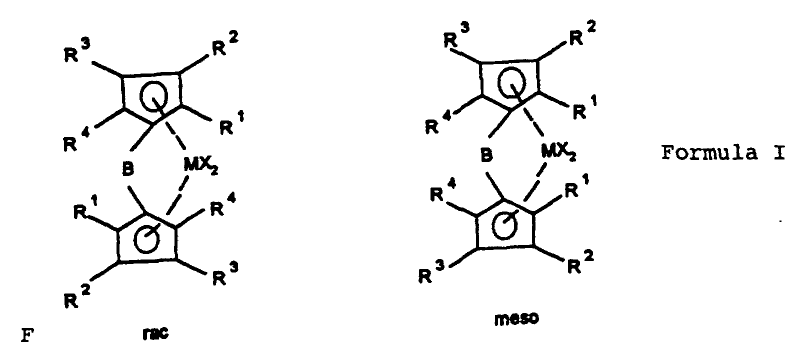 where
M is a metal of groups IIIb, IVb, Vb or VIb of the Periodic Table of the Elements,
the radicals X are identical or different and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄ₒ-alkylaryl or C₈-C₄₀-arylalkenyl, an OH group, a halogen atom or a pseudohalogen such as nitrile,
the radicals R¹ and R² are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or a NR⁵₂, SR⁵, OSiR⁵₃, SiR⁵₃ or PR⁵₂ group with R⁵ defined as for X, with preference being given to the radicals R² being identical and each being a hydrogen atom and the radicals R¹ being identical and being hydrogen or linear or branched C₁-C₁₀-alkyl,
the radicals R³ and R⁴ are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or an NR⁵₂, SR⁵, OSiR⁵₃, SiR⁵₃ or PR⁵₂ group with R⁵ defined as for X, or the radicals R³ and R⁴ together form an unsubstituted butadienyl group,
B is a bridge between the indenyl ligands, which can be, for example, single- to four-membered, with the proviso that the radicals R¹, R², R³ and R⁴ are not all identical and that, if R³ and R⁴ together form an unsubstituted butadienyl group, R¹ and R² are hydrogen, comprising the steps:
a) reaction of a substituted cyclopentadiene of the formula A 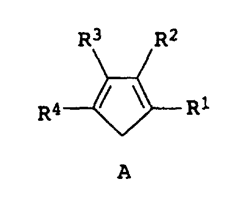 with a bridging reagent BY₂ to form a bridged biscyclopentadienyl ligand system,
b) reaction of the bridged biscyclopentadienyl ligand system with a metal halide to form a metallocene of the formula Ia 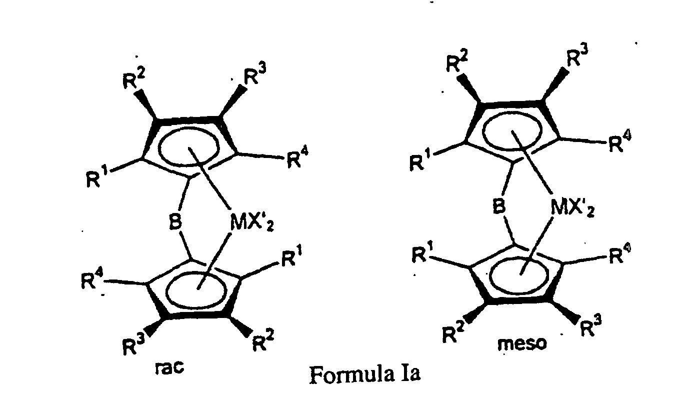 where X' is halogen,
c) and, if desired, reaction of a metallocene of the formula Ia with an organometallic compound R³'M¹, where M¹ is an element of main groups 1 to 3 and R³' is a hydrogen atom, a C₁-C₄₀ group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, to form a metallocene of the formula Ib 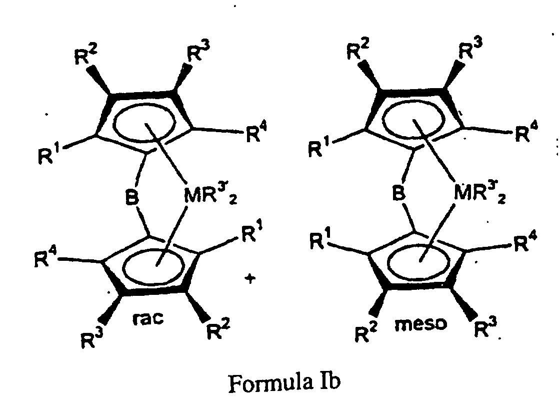
where all steps are carried out in the same solvent or solvent mixture.

2. A chiral rac/meso-metallocene of the formula I having an rac/meso ratio of from > 20:1 to < 200:1 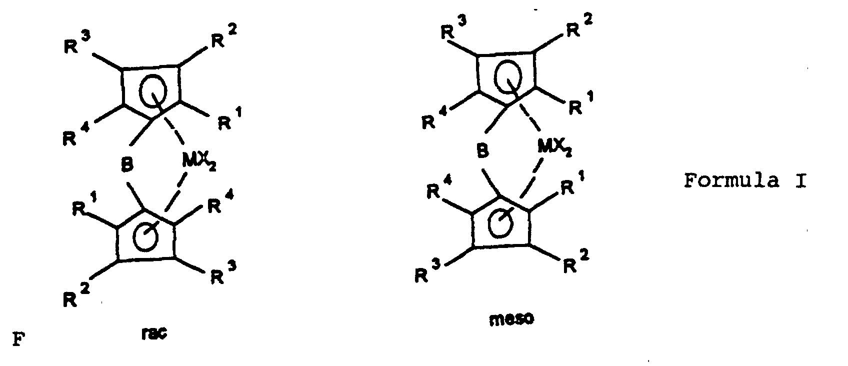 where
M is a metal of groups IIIb, IVb, Vb or VIb of the Periodic Table of the Elements,
the radicals X are identical and are each liear or branched C₁-C₁₀-alkyl or a halogen atom,
the radicals R¹ and R² are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or a NR⁵₂, SR⁵, OSiR⁵₃, SiR⁵₃ or PR⁵₂ group with R⁵ defined as for X, with preference being given to the radicals R² being identical and each being a hydrogen atom and the radicals R¹ being identical and being hydrogen or linear or branched C₁-C₁₀-alkyl,
the radicals R³ and R⁴ are identical or different, with even radicals having the same index being able to be different, and are each a hydrogen atom, a C₁-C₄₀-group such as C₁-C₁₀-alkyl, C₁-C₁₀-alkoxy, C₆-C₂₀-aryl, C₆-C₂₀-aryloxy, C₂-C₁₀-alkenyl, C₇-C₄₀-arylalkyl, C₇-C₄₀-alkylaryl or C₈-C₄₀-arylalkenyl, an OH group, a halogen atom or a pseudohalogen such as nitrile, or an NR⁵₂, SR⁵, OSiR⁵₃, SiR⁵₃ or PR⁵₂ group with R⁵ defined as for X, or the radicals R³ and R⁴ together form an unsubstituted butadienyl group, with particular preference being given to the radicals R³ and R⁴ being hydrogen, linear or branched C₁-C₁₀-alkyl or together forming an unsubstituted butadienyl group,
B is a bridge between the indenyl ligands which may be, for example, single- to four-membered, with the proviso that the radicals R¹, R², R³ and R⁴ are not all identical and that, if R³ and R⁴ together form an unsubstituted butadienyl group, R¹ and R² are hydrogen.

3. A catalyst comprising a) at least one chiral rac/meso-metallocene of the formula I as claimed in claim 2 and b) at least one cocatalyst.

4. A catalyst as claimed in claim 3 which further comprises a support.

5. A catalyst as claimed in claim 3 or 4 which is in prepolymerized form.

6. A process for polymerizing olefins in the presence of a catalyst as claimed in one or more of claims 3 to 5.

7. The use of a catalyst as claimed in one or more of claims 3 to 5 for the polymerization of olefins.

## Revendications

1. Procédé de préparation d'un métallocène racémique/méso de formule I présentant un rapport racémique/méso supérieur à 20:1 et inférieur à 200:1 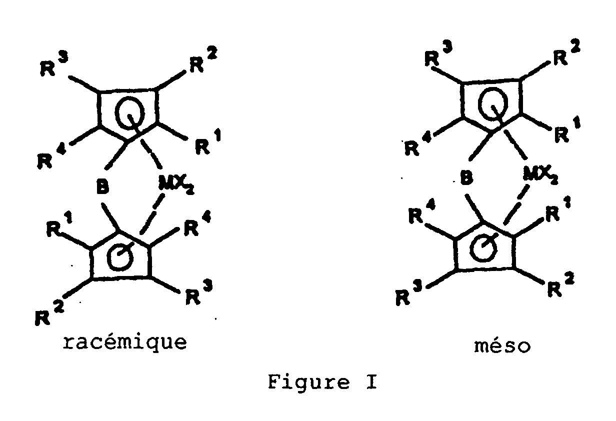 formule dans laquelle
M représente un atome d'un métal choisi dans le groupe IIIb, IVb, Vb ou VIb de la Classification Périodique des Eléments,
les restes X sont identiques ou différents et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile,
les restes R¹ et R² sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X, où, de préférence, les restes R² sont identiques et représentent un atome d'hydrogène, et les restes R¹ sont identiques et représentent un atome d'hydrogène ou un groupe alkyle en C₁ à C₁₀ linéaire ou ramifié,
les restes R³ et R⁴ sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X, ou bien les restes R³ et R⁴ représentent conjointement un groupe butadiényle non substitué,
B représente un pont entre les ligands indényle, qui peut comprendre par exemple un à quatre maillons, à condition que les restes R¹, R², R³ et R⁴ ne soient pas tous identiques et que R¹ et R² représentent un atome d'hydrogène dans le cas où R³ et R⁴ représentent conjointement un groupe butadiényle non substitué,
comprenant les étapes consistant à :
a) faire réagir un cyclopentadiène substitué de formule A 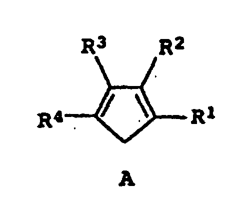 et un réactif de pontage BY₂ pour donner un système de ligand bis-cyclopentadiényle ponté,
b) faire réagir le système de ligand bis-cyclopentadiényle ponté et un halogénure métallique pour donner un métallocène de formule Ia 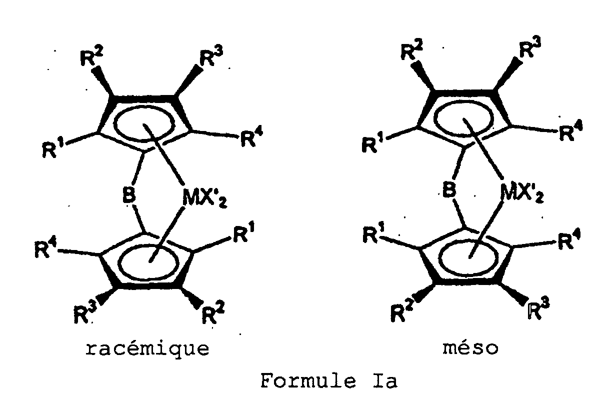 dans laquelle X' représente un atome d'halogène,
c) et, éventuellement, faire réagir le métallocène de formule Ia et un composé organométallique R^{3'}M¹, dans laquelle M¹ représente un atome d'un élément choisi dans le 1^{er} au 3^{ème} groupe principal, et R^{3'} représente un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile,
pour obtenir un métallocène de formule Ib 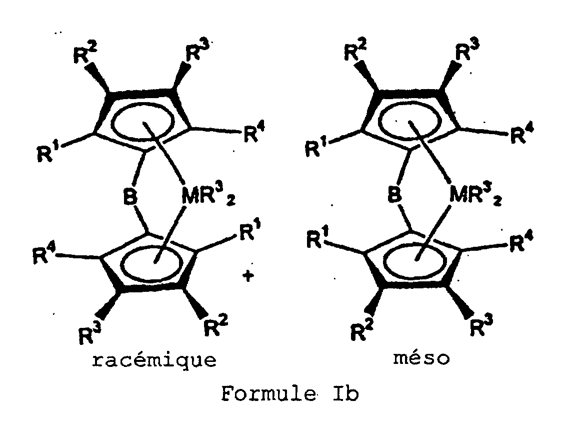 toutes les étapes étant réalisées dans le même solvant ou mélange de solvants.

2. Métallocène racémique/méso chiral de formule I présentant un rapport racémique/méso supérieur à 20:1 et inférieur à 200:1 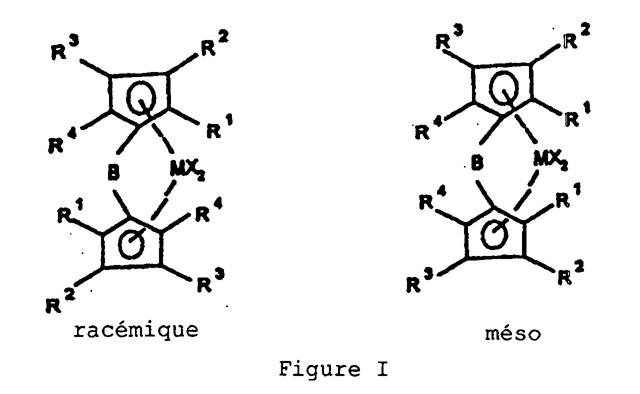 formule dans laquelle
M représente un atome d'un métal choisi dans le groupe IIIb, IVb, Vb ou VIb de la Classification Périodique des Eléments,
les restes X sont identiques et représentent un groupe alkyle en C₁ à C₁₀ linéaire ou ramifié ou un atome d'halogène,
les restes R¹ et R² sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X, où, de préférence, les restes R² sont identiques et représentent un atome d'hydrogène, et les restes R¹ sont identiques et représentent un atome d'hydrogène ou un groupe alkyle en C₁ à C₁₀ linéaire ou ramifié,
les restes R³ et R⁴ sont identiques ou différents, les restes présentant le même exposant étant éventuellement différents, et représentent un atome d'hydrogène, un groupe carboné en C₁ à C₄₀ tel qu'un groupe alkyle en C₁ à C₁₀, alcoxy en C₁ à C₁₀, aryle en C₆ à C₂₀, aryloxy en C₆ à C₂₀, alcényle en C₂ à C₁₀, arylalkyle en C₇ à C₄₀, alkylaryle en C₇ à C₄₀ et arylalcényle en C₈ à C₄₀, un groupe -OH, un atome d'halogène ou un pseudohalogène tel qu'un groupe nitrile, ou bien un reste NR⁵₂-, SR⁵-, OSiR⁵₃-, SiR⁵₃- ou PR⁵₂- avec R⁵ prenant la signification de X, ou bien les restes R³ et R⁴ représentent conjointement un groupe butadiényle non substitué, où, de manière particulièrement préférée, les restes R³ et R⁴ représentent un atome d'hydrogène ou un groupe alkyle en C₁ à C₁₀ linéaire ou ramifié, ou bien représentent conjointement un groupe butadiényle non substitué, et
B représente un pont entre les ligands indényle, qui peut comprendre par exemple un à quatre maillons, à condition que les restes R¹, R², R³ et R⁴ ne soient pas tous identiques et que R¹ et R² représentent un atome d'hydrogène dans le cas où R³ et R⁴ représentent conjointement un groupe butadiényle non substitué.

3. Catalyseur contenant a) au moins un métallocène racémique/méso chiral de formule I selon la revendication 2, et b) au moins un co-catalyseur.

4. Catalyseur selon la revendication 3, contenant, de plus, un support.

5. Catalyseur selon la revendication 3 ou 4, **caractérisé en ce qu'**il est présent sous forme prépolymérisée.

6. Procédé pour la polymérisation d'oléfines en présence d'un catalyseur selon une ou plusieurs des revendications 3 à 5.

7. Mise en oeuvre d'un catalyseur selon une ou plusieurs des revendications 3 à 5, pour la polymérisation d'oléfines.
